# EUROPÄISCHE PATENTSCHRIFT

(11) **EP 3 235 854 B1**
(45) Veröffentlichungstag und Bekanntmachung des Hinweises auf die Patenterteilung: **28.06.2023**
(21) Anmeldenummer: 17169719.6
(22) Anmeldetag: 04.09.2014
(51) Int. Cl.: C08G 75/23, C08G 65/40

(54) **POLYARYLENETHERSULFON-POLYMERE FÜR MEMBRANANWENDUNGEN**
POLYARYLENE ETHER SULFONE POLYMERS FOR MEMBRANE APPLICATIONS
POLYMÈRES DE POLYARYLÈNEÉTHERSULFONE POUR APPLICATIONS DE MEMBRANES

(30) Priorität: 09.09.2013 EP 13183574
(43) Veröffentlichungstag der Anmeldung: 25.10.2017
(62) Teilanmeldung aus: 14758946.9
(73) Patentinhaber: BASF SE, 67056 Ludwigshafen am Rhein (DE)
(72) Erfinder: Weber, Martin, 67487 Maikammer (DE); Maletzko, Christian, 67122 Altrip (DE); Erbes, Joerg, 76137 Karlsruhe (DE); Kortekamp, Tobias, 68161 Mannheim (DE); Staal, Bastiaan Bram Pieter, 67117 Limburgerhof (DE); Heil, Thomas, 67157 Wachenheim (DE)
(74) Vertreter: BASF IP Association

(56) Entgegenhaltungen:
- EP-A1- 2 554 564
- EP-A2- 0 278 720
- WO-A1-2012/160172
- WO-A2-01/66620
- DE-A1- 19 907 605

## Beschreibung

Die vorliegende Erfindung betrifft die Verwendung von Kaliumkarbonat mit einer volumengewichteten mittleren Teilchengröße von 20 nm bis 25 µm, bestimmt mit einem Partikelgrößenmessgerät in einer Suspension des Kaliumkarbonats in einer Mischung aus Chlorbenzol und Sulfolan (60/40), zur Einstellung der Polydispersität (Q) auf ≤ 4 in einem Verfahren zur Herstellung eines Polyarylenethersulfon-Polymers durch Umsetzung eines Reaktionsgemischs (R_{G}) enthaltend eine Dihalogenkomponente (A1) und eine Dihydroxykomponente (B1), wobei die Polydispersität (Q) definiert ist als Quotient aus dem gewichtsmittleren Molekulargewicht (Mw) und dem zahlenmittleren Molekulargewicht (Mₙ), gemessen mittels Gelpermeationschromatographie (GPC) und Dimethylacetamid (DMAc) als Lösungsmittel gegen engverteiltes Polymethylmethacrylat als Standard.

Polyarylenethersulfon-Polymere gehören zur Gruppe der Hochleistungsthermoplaste und zeichnen sich durch hohe Wärmeformbeständigkeit, gute mechanische Eigenschaften und inhärente Flammwidrigkeit aus (E.M. Koch, H.-M. Walter, Kunststoffe 80 (1990) 1146; E. Döring, Kunststoffe 80, (1990) 1149, N. Inchaurondo-Nehm, Kunststoffe 98, (2008) 190). Aufgrund ihrer guten Bioverträglichkeit werden Polyarylenether auch als Material zur Herstellung von Dialysemembranen verwendet (N. A. Hoenich, K. P. Katapodis, Biomaterials 23 (2002) 3853).

Die Herstellung der Polyarylenethersulfon-Polymere kann unter anderem entweder über die Hydroxid-Methode, bei der zuerst aus der Dihydroxykomponente und dem Hydroxid ein Salz hergestellt wird, oder über die sogenannte Carbonat-Methode erfolgen.

Allgemeine Hinweise zur Herstellung der Polyarylenethersulfon-Polymere nach der Hydroxid-Methode finden sich u.a. bei R.N. Johnson et.al., J.Polym. Sci. A-1 5 (1967) 2375, während bei J.E. McGrath et.al., Polymer 25 (1984) 1827, die Carbonat-Methode beschrieben ist.

Verfahren zur Herstellung von Polyarylenethersulfon-Polymeren aus aromatischen Bishalogenverbindungen und aromatischen Bisphenolen oder deren Salzen in Gegenwart mindestens eines Alkalimetall- oder Ammoniumcarbonats oder -hydrogencarbonats in einem aprotischen Lösungsmittel sind dem Fachmann bekannt und werden beispielsweise in EP-A 297 363 und EP-A 135 130 beschrieben.

Die Herstellung von Hochleistungsthermoplasten wie Polyarylenethersulfon-Polymeren erfolgt durch Polykondensationsreaktionen, die üblicherweise bei hoher Reaktionstemperatur in dipolar aprotischen Lösungsmitteln, wie beispielweise DMF, DMAc, Sulfolan, DMSO und NMP durchgeführt werden.

Anwendungen von Polyarylenethersulfon-Polymeren in Polymermembranen gewinnen zunehmend an Bedeutung.

In der EP 0 412 499 ist ein Verfahren zur Herstellung von Polyarylenethersulfon-Polymeren beschrieben. Als Dihalogenkomponente kommen bei dem Verfahren gemäß EP 0 412 499 beispielsweise 4,4'-Dichlordiphenylsulfon oder 4,4'-Difluordiphenylsulfon zum Einsatz. Als Dihydroxykomponente sind in der EP 0 412 499 unter anderem Bisphenol A, 4,4'-Dihydroxydiphenylsulfon und 4,4'-Dihydroxybenzophenon beschrieben. Die Polykondensation gemäß EP 0 412 499 erfolgt in Gegenwart von Natriumcarbonat oder Natriumbicarbonat (Natriumhydrogencarbonat). Das eingesetzte Natriumcarbonat ist dabei fein gemahlen und weist Partikelgrößen (D 90 %) von ≤ 20 µm auf. Die nach dem in der EP 0 412 499 beschriebenen Verfahren erhältlichen Polyarylenethersulfon-Polymere weisen, insbesondere für Membrananwendungen, unzureichende mechanische Eigenschaften auf. Darüber hinaus ist die Polydispersität der nach diesem Verfahren erhältlichen Polyarylenethersulfon-Polymere relativ hoch. Auch die Reaktionsdauer zur Herstellung der Polyarylenethersulfon-Polymere ist für ein wirtschaftliches Verfahren zu lang.

In der WO 01/66620 ist ein Verfahren zur Herstellung von Polybiphenylethersulfon-Polymeren mit niedriger Eigenfarbe beschrieben. Für dieses Verfahren ist es wesentlich, dass als Dihydroxykomponente mindestens 75 mol-%, bevorzugt mindestens 90 mol-% 4,4'-Dihydroxybiphenyl eingesetzt wird. Das in der WO 01/66620 beschriebene Polybiphenylethersulfon-Polymer weist somit mindestens 75 mol-%, bevorzugt mindestens 90 mol-% 4,4'-Biphenylen-Einheiten auf, bezogen auf die eingesetzte Dihydroxyverbindung. Als Dihalogenkomponente wird beispielsweise 4,4'-Dichlordiphenylsulfon beschrieben. Die Polykondensation wird in Gegenwart eines Metallcarbonats, bevorzugt Kaliumcarbonat, durchgeführt, dessen Partikelgröße im Bereich von 10 bis 30 µm liegt. Hierdurch werden Polybiphenylenethersulfon-Polymere mit einer geringen Eigenfarbe erhalten. Die nach dem Verfahren gemäß WO 01/66620 erhältlichen Polybiphenylethersulfon-Polymere weisen, insbesondere für Membrananwendungen, ungenügende mechanische Eigenschaften auf. Darüber hinaus zeichnen sich die Polybiphenylethersulfon-Polymere durch eine relativ hohe Polydispersität aus.

Die DE 199 07 605 beschreibt ein Verfahren zur Herstellung von Polyether-blockcopolysulfonen. Bei diesem Verfahren wird ein aromatisches Sulfonpolymer mit einem aliphatischen Polyether umgesetzt. Das Polysulfon kann beispielsweise aus Bisphenol A oder 4,4'-Dihydroxydiphenylverbindungen hergestellt werden. Im Zusammenhang mit der Herstellung des Block-copolymers ist Kaliumcarbonat als basischer Katalysator offenbart.

Die EP 2 554 564 beschreibt ein Verfahren zur Herstellung eines Block-copolymers, das Polyarylenether- und Polyalkylenoxidblöcke umfasst, durch Umsetzung eines HOterminierten Polyarylenethers mit einem monomeren Alkylenoxid. In dem Verfahren wird zur Herstellung der Polyarylenether eine aromatische Dihydroxyverbindung mit einer Dihalogendiphenylsulfonverbindung in Gegenwart einer Base umgesetzt.

Bevorzugt ist die Base Kaliumcarbonat mit einer volumengemittelten mittleren Teilchengröße von weniger als 100 µm.

Die EP 0 278 720 beschreibt ein Verfahren zur Herstellung von Polyarylenethern. Gemäß Beispiel 11 können zur Herstellung des Polyarylenethersulfonpolymers 4,4'-Dihydroxybiphenyl und 4,4'-Dichlordiphenylsulfon in Gegenwart von Kaliumcarbonat miteinander zur Reaktion gebracht werden. Es wird Kaliumcarbonat mit einer Partikelgröße von < 300 µm eingesetzt.

Die WO 2012/160172 beschreibt Polymere mit geringer Bindungsaffinität zu Estrogenrezeptoren. Das Polymer kann unter anderem ein Polyarylenethersulfon-polymer sein. Zur Herstellung werden verschiedene Methoden beschrieben, unter anderem die Carbonatmethode, die Alkalimetallhydroxidmethode und die Phasentransferkatalysatormethode. Als Carbonatkomponente bevorzugt sind Natriumcarbonat und Kaliumcarbonat. Die Alkalimetallcarbonatkomponente hat vorzugsweise eine Partikelgröße von < 30 µm.

Der vorliegenden Erfindung liegt somit die Aufgabe zugrunde, ein Verfahren zur Herstellung von Polyarylenethersulfon-Polymeren bereitzustellen, das die Nachteile der im Stand der Technik beschriebenen Verfahren nicht oder nur in vermindertem Maße aufweist. Das Verfahren soll innerhalb von kurzen Reaktionszeiten durchführbar sein. Die nach dem Verfahren erhältlichen Polyarylenethersulfon-Polymere sollen eine geringe Polydispersität sowie gute mechanische Eigenschaften, insbesondere im Hinblick auf Membrananwendungen, aufweisen. Darüber hinaus soll das Verfahren innerhalb kurzer Reaktionszeiten einen guten Molekulargewichtsaufbau ermöglichen.

Gelöst wird diese Aufgabe durch die Verwendung von Kaliumkarbonat mit einer volumengewichteten mittleren Teilchengröße von 20 nm bis 25 µm, bestimmt mit einem Partikelgrößenmessgerät in einer Suspension des Kaliumkarbonats in einer Mischung aus Chlorbenzol und Sulfolan (60/40), zur Einstellung der Polydispersität (Q) auf ≤ 4 in einem Verfahren zur Herstellung eines Polyarylenethersulfon-Polymers durch Umsetzen eines Reaktionsgemischs (R_{G}) enthaltend die Komponenten:
(A1) eine Dihalogenkomponente, die mindestens 50 Gew.-% mindestens einer Dihalogenverbindung ausgewählt aus der Gruppe bestehend aus 4,4'-Dichlordiphenylsulfon und 4,4'-Difluordiphenylsulfon enthält, bezogen auf das Gesamtgewicht der Komponente (A1) im Reaktionsgemisch (R_{G}),
(B1) eine Dihydroxykomponente, die mindestens 80 Gew.-% mindestens einer Dihydroxyverbindung ausgewählt aus der Gruppe bestehend aus 4,4'-Dihydroxydiphenylsulfon, Bisphenol A, 4,4'-Dihydroxybenzophenon und Hydrochinon enthält, bezogen auf das Gesamtgewicht der Komponente (B1) im Reaktionsgemisch (R_{G}),
wobei die Polydispersität (Q) definiert ist als Quotient aus dem gewichtsmittleren Molekulargewicht (Mw) und dem zahlenmittleren Molekulargewicht (Mₙ), gemessen mittels Gelpermeationschromatographie (GPC) und Dimethylacetamid (DMAc) als Lösungsmittel gegen engverteiltes Polymethylmethacrylat als Standard.

Bei den im Stand der Technik beschriebenen Verfahren zur Herstellung von Polyarylenethersulfon-Polymeren werden meist sehr breite Molekulargewichtsverteilungen erhalten. Ein Maß für die Molekulargewichtsverteilung ist die Polydispersität (Q). Die Polydispersität (Q) ist definiert als Quotient aus dem gewichtsmittleren Molekulargewicht (Mw) und dem zahlenmittleren Molekulargewicht (Mₙ). Bei den im Stand der Technik beschriebenen Verfahren werden meist Polydispersitäten (Q) von deutlich größer als 3,5 erhalten. Polyarylenethersulfon-Polymere mit Polydispersitäten (Q) von > 4 sind insbesondere zur Herstellung von Membranen nur bedingt geeignet.

Aus der Literatur ist weiterhin bekannt (S. Savariar, G.S. Underwood, E.M. Dickinson, P.J. Schielke, A.S. Hay, Desalination 144 (2002) 15), dass durch Abtrennung von cyclischen Oligomeren, welche bei der Synthese von Polysulfon entstehen (H. R. Kricheldorf, S. Bohme, G. Schwarz, R.-P. Krüger, G. Schulz, Macromolecules 34 (2001) 8886), die Stabilität von Spinnlösungen für die Herstellung von Hohlfasermembranen verbessert werden können. In der Arbeit von Savariar wird auch die Verbesserung der mechanischen Eigenschaften bei Abtrennung der zyklischen Oligomere erwartet. Die Abtrennung der zyklischen Oligomere ist jedoch nur durch aufwändige Fraktionierung möglich.

Ziel der Erfindung ist es darüber hinaus, ein Verfahren zur Verfügung zu stellen, bei dem zyklische Oligomere nicht abgetrennt werden müssen. Die erfindungsgemäße Aufgabe wird durch die erfindungsgemäße Verwendung von Kaliumkarbonat in einem Verfahren zur Herstellung eines Polyarylenethersulfon-Polymers gelöst.

### Reaktionsgemisch (R_{G})

Zur Herstellung des erfindungsgemäßen Polyarylenethersulfon-Polymers wird ein Reaktionsgemisch (R_{G}) umgesetzt, welches die vorstehend beschriebenen Komponenten (A1), (B1), (C) und gegebenenfalls (D) enthält. Die Komponenten (A1) und (B1) gehen dabei eine Polykondensationsreaktion ein.

Die Komponente (D) dient als Lösungsmittel. Die Komponente (C) dient als Base, um die Komponente (B1) während der Kondensationsreaktion zu deprotonieren.

Unter Reaktionsgemisch (R_{G}) wird dabei das Gemisch verstanden, das im erfindungsgemäßen Verfahren zur Herstellung des Polyarylenethersulfon-Polymers eingesetzt wird. Vorliegend beziehen sich alle Angaben in Bezug auf das Reaktionsgemisch (R_{G}) somit auf das Gemisch, das vor der Polykondensation vorliegt. Während des erfindungsgemäßen Verfahrens findet die Polykondensation statt, wobei sich das Reaktionsgemisch (R_{G}) durch Polykondensation der Komponenten (A1) und (B1) zum Zielprodukt, dem Polyarylenethersulfon-Polymer, umsetzt. Das nach der Polykondensation erhaltene Gemisch, welches das Zielprodukt, das Polyarylenethersulfon-Polymer, enthält, wird auch als Produktgemisch (P_{G}) bezeichnet.

In der Regel werden die Komponenten des Reaktionsgemischs (R_{G}) gemeinsam zur Reaktion gebracht. Die einzelnen Komponenten können dabei in einem vorgelagerten Schritt gemischt und anschließend zur Reaktion gebracht werden. Es ist auch möglich, die Einzelkomponenten einem Reaktor zuzuführen, in dem diese gemischt werden und nachfolgend zur Reaktion gebracht werden.

Bei dem erfindungsgemäßen Verfahren werden die einzelnen Komponenten des Reaktionsgemischs (R_{G}) im Allgemeinen gemeinsam umgesetzt. Die Umsetzung erfolgt dabei bevorzugt einstufig. Das heißt, die Deprotonierung der Komponente (B1) sowie die Kondensationsreaktion zwischen den Komponenten (A1) und (B1) erfolgt in einer einzigen Reaktionsstufe, ohne dass Zwischenprodukte, wie beispielsweise die deprotonierten Spezies der Komponente (B1) isoliert werden.

### Komponente (A1)

Als Komponente (A1), die auch als Dihalogenkomponente bezeichnet wird, enthält das Reaktionsgemisch (R_{G}) mindestens eine Dihalogenverbindung. Unter "mindestens eine Dihalogenverbindung" werden vorliegend genau eine Dihalogenverbindung sowie Gemische aus zwei oder mehreren Dihalogenverbindungen verstanden.

Bei der Komponente (A1) kann es sich somit sowohl um eine einzelne Dihalogenverbindung, als auch um eine Mischung aus zwei oder mehreren Dihalogenverbindungen handeln.

Es ist erfindungswesentlich, dass die Komponente (A1) mindestens 50 Gew.-% mindestens einer Dihalogenverbindung ausgewählt aus der Gruppe bestehend aus 4,4`-Dichlordiphenylsulfon und 4,4'-Difluordiphenylsulfon enthält, bezogen auf das Gesamtgewicht der Komponente (A1) im Reaktionsgemisch (R_{G}). Die Gewichtsprozentangaben in Bezug auf die Komponente (A1) beziehen sich dabei darüber hinaus auf die Summe des eingesetzten 4,4`-Dichlordiphenylsulfons und des eingesetzten 4,4'-Difluordiphenylsulfons. Unter 4,4'-Dichlordiphenylsulfon und 4,4'-Difluordiphenylsulfon ist das 4,4`-Dichlordiphenylsulfon bevorzugt.

Das 4,4`-Dichlordiphenylsulfon und das 4,4`-Difluordiphenylsulfon können dabei als Reinstoff oder als technisches Produkt eingesetzt werden, das bis zu 2 Gew.-%, bevorzugt bis zu 1 Gew.-% und besonders bevorzugt bis zu 0,5 Gew.-% Verunreinigungen enthalten kann, jeweils bezogen auf das Gesamtgewicht des eingesetzten 4,4`-Dichlordiphenylsulfons bzw. des eingesetzten 4,4`-Difluordiphenylsulfons. Die gegebenenfalls enthaltenen Verunreinigungen sind in den Gew-% Angaben in Bezug auf die Komponente (A1) mit enthalten.

In einer Ausführungsform enthält die Komponente (A1) mindestens 80 Gew.-%, bevorzugt mindestens 90 Gew.-% und besonders bevorzugt mindestens 98 Gew.-% mindestens einer Dihalogenverbindung ausgewählt aus der Gruppe bestehend aus 4,4'-Dichlordiphenylsulfon und 4,4'-Difluordiphenylsulfon, bezogen auf das Gesamtgewicht der Komponente (A1) im Reaktionsgemisch (R_{G}). Die Gewichtsprozentangaben in Bezug auf die Komponente (A1) beziehen sich dabei darüber hinaus auf die Summe des eingesetzten 4,4`-Dichlordiphenylsulfons und des eingesetzten 4,4'-Difluordiphenylsulfons.

Die Komponente (A1) kann darüber hinaus andere, von 4,4`-Dichlordiphenylsulfon und 4,4'-Difluordiphenylsulfon verschiedene, Dihalogenverbindungen enthalten. Die Komponente (A1) enthält maximal 50 Gew.-%, bevorzugt maximal 20 Gew.-%, besonders bevorzugt maximal 10 Gew.-% und insbesondere maximal 2 Gew.-% anderer Dihalogenverbindungen.

In einer besonders bevorzugten Ausführungsform enthält die Komponente (A1) mindestens 50 Gew.-%, bevorzugt mindestens 80 Gew.-%, besonders bevorzugt mindestens 90 Gew.-% und insbesondere mindestens 98 Gew.-% 4,4'-Dichlordiphenylsulfon.

Weiterhin ist es besonders bevorzugt, dass das Reaktionsgemisch (R_{G}) neben den Dihalogenverbindungen der Komponente (A1) keine weiteren Dihalogenverbindungen enthält.

Gegenstand der vorliegenden Erfindung ist somit auch ein Verfahren, bei dem das Reaktionsgemisch (R_{G}) neben den Dihalogenverbindungen der Komponente (A1) keine weiteren Dihalogenverbindungen enthält.

In einer weiteren besonders bevorzugten Ausführungsform besteht die Komponente (A1) im Wesentlichen aus mindestens einer Dihalogenverbindung ausgewählt aus der Gruppe bestehend aus 4,4`-Dichlordiphenylsulfon und 4,4`-Difluordiphenylsulfon. Unter "bestehend im Wesentlichen aus" wird vorliegend verstanden, dass die Komponente (A1) mehr als 99 Gew.-%, bevorzugt mehr 99,5 Gew.-%, insbesondere bevorzugt mehr als 99,9 Gew.-% mindestens einer Dihalogenverbindung ausgewählt aus der Gruppe bestehend aus 4,4`-Dichlordiphenylsulfon und 4,4'-Difluordiphenylsulfon enthält, jeweils bezogen auf das Gesamtgewicht der Komponente (A1) im Reaktionsgemisch (R_{G}). Bei diesen Ausführungen ist 4,4`-Dichlordiphenylsulfon als Komponente (A1) besonders bevorzugt.

In einer weiteren besonders bevorzugten Ausführungsform besteht Komponente (A1) im Wesentlichen aus 4,4`-Dichlordiphenylsulfon. In einer weiteren besonders bevorzugten Ausführungsform besteht Komponente (A1) aus 4,4`-Dichlordiphenylsulfon.

### Komponente (B1)

Das Reaktionsgemisch (R_{G}) enthält als Komponente (B1), die auch als Dihydroxykomponente bezeichnet wird, mindestens eine Dihydroxyverbindung. Unter "mindestens eine Dihydroxyverbindung" werden vorliegend genau eine Dihydroxyverbindung sowie Gemische aus zwei oder mehreren Dihydroxyverbindungen verstanden.

Bei der Komponente (B1) kann es sich somit sowohl um eine einzelne Dihydroxyverbindung, als auch um Mischungen aus zwei oder mehreren Dihydroxyverbindungen handeln.

Es ist erfindungswesentlich, dass die Komponente (B1) mindestens 80 Gew.-% mindestens einer Dihydroxyverbindung ausgewählt aus der Gruppe bestehend aus 4,4'-Dihydroxydiphenylsulfon, Bisphenol A (2,2-Bis-(4-hydroxyphenyl)-propan), 4,4'-Dihydroxybenzophenon und Hydrochinon enthält, bezogen auf das Gesamtgewicht der Komponente (B1) im Reaktionsgemisch (R_{G}). Die Gewichtsprozentangaben in Bezug auf die Komponente (B1) beziehen sich dabei darüber hinaus auf die Summe des eingesetzten 4,4'-Dihydroxydiphenylsulfons, Bisphenols A (2,2-Bis-(4-hydroxyphenyl)-propan), 4,4'-Dihydroxybenzophenons und Hydrochinons. Unter den vorstehend genannten Dihydroxyverbindungen sind 4,4'-Dihydroxydiphenylsulfon und Bisphenol A bevorzugt, wobei Bisphenol A besonders bevorzugt ist.

Das 4,4'-Dihydroxydiphenylsulfon, das Bisphenol A (2,2-Bis-(4-hydroxyphenyl)-propan), das 4,4'-Dihydroxybenzophenon und das Hydrochinon können dabei als Reinstoff oder als technisches Produkt eingesetzt werden, das bis zu 2 Gew.-%, bevorzugt bis zu 1 Gew.-% und besonders bevorzugt bis zu 0,5 Gew.-% Verunreinigungen enthalten kann, jeweils bezogen auf das Gesamtgewicht des eingesetzten 4,4'-Dihydroxydiphenylsulfons, des eingesetzten Bisphenols A (2,2-Bis-(4-hydroxyphenyl)-propan), des eingesetzten 4,4'-Dihydroxybenzophenons und des eingesetzten Hydrochinons. Die gegebenenfalls enthaltenen Verunreinigungen sind in den Gew-% Angaben in Bezug auf die Komponente (B1) mit enthalten.

In einer Ausführungsform enthält die Komponente (B1) mindestens 90 Gew.-% und besonders bevorzugt mindestens 98 Gew.-% mindestens einer Dihydroxyverbindung ausgewählt aus der Gruppe bestehend aus 4,4'-Dihydroxydiphenylsulfon, Bisphenol A (2,2-Bis-(4-hydroxyphenyl)-propan), 4,4'-Dihydroxybenzophenon und Hydrochinon, bezogen auf das Gesamtgewicht der Komponente (B1) im Reaktionsgemisch (R_{G}). Die Gewichtsprozentangaben in Bezug auf die Komponente (B1) beziehen sich dabei darüber hinaus auf die Summe des eingesetzten 4,4'-Dihydroxydiphenylsulfons, Bisphenols A (2,2-Bis-(4-hydroxyphenyl)-propan), 4,4'-Dihydroxybenzophenons und Hydrochinons.

Die Komponente (B1) kann darüber hinaus andere, von 4,4'-Dihydroxydiphenylsulfon, Bisphenol A (2,2-Bis-(4-hydroxyphenyl)-propan), 4,4'-Dihydroxybenzophenon und Hydrochinon verschiedene, Dihydroxyverbindungen enthalten. Die Komponente (B1) enthält maximal 20 Gew.-%, besonders bevorzugt maximal 10 Gew.-% und insbesondere maximal 2 Gew.-% anderer Dihydroxyverbindungen.

Als andere Dihydroxyverbindungen können beispielsweise alle bekannten Verbindungen eingesetzt werden, die zwei phenolische Hydroxygruppen aufweisen. Unter "phenolische Hydroxygruppe" wird erfindungsgemäß eine Hydroxygruppe (-OH) verstanden, die an ein aromatisches System gebunden ist. Geeignete andere Dihydroxyverbindungen sind beispielsweise Resorcin (1,3-Dihydroxybenzol), Dihydroxynaphthaline, Bisphenol TMC (1,1-Bis(4-hydroxyphenyl)-3,3,5-trimethylcyclohexan), Bisphenol AF (2,2-Bis(4-hydroxyphenyl)hexafluorpropan), 1,1-Bis(4-hydroxyphenyl)-3,3-dimethyl-cyclopentan und/oder 4,4`-Dihydroxybiphenyl.

In einer besonders bevorzugten Ausführungsform enthält die Komponente (B1) mindestens 50 Gew.-%, bevorzugt mindestens 80 Gew.-%, besonders bevorzugt mindestens 90 Gew.-% und insbesondere mindestens 98 Gew.-% Bisphenol A.

In einer besonders bevorzugten Ausführungsform enthält die Komponente (B1) mindestens 50 Gew.-%, bevorzugt mindestens 80 Gew.-%, besonders bevorzugt mindestens 90 Gew.-% und insbesondere mindestens 98 Gew.-% 4,4'-Dihydroxydiphenylsulfon.

Weiterhin ist es besonders bevorzugt, dass das Reaktionsgemisch (R_{G}) neben den Dihalogenverbindungen der Komponente (B1) keine weiteren Dihydroxyverbindungen enthält.

Gegenstand der vorliegenden Erfindung ist somit auch ein Verfahren, bei dem das Reaktionsgemisch (R_{G}) neben den Dihalogenverbindungen der Komponente (B1) keine weiteren Dihydroxyverbindungen enthält.

In einer weiteren besonders bevorzugten Ausführungsform besteht die Komponente (B1) im Wesentlichen aus mindestens einer Dihydroxyverbindung ausgewählt aus der Gruppe bestehend aus 4,4'-Dihydroxydiphenylsulfon, Bisphenol A (2,2-Bis-(4-hydroxyphenyl)-propan), 4,4'-Dihydroxybenzophenon und Hydrochinon. Unter "bestehend im Wesentlichen aus" wird vorliegend verstanden, dass die Komponente (B1) mehr als 99 Gew.-%, bevorzugt mehr 99,5 Gew.-%, insbesondere bevorzugt mehr als 99,9 Gew.-% mindestens einer Dihydroxyverbindung ausgewählt aus der Gruppe bestehend aus 4,4'-Dihydroxydiphenylsulfon, Bisphenol A (2,2-Bis-(4-hydroxyphenyl)-propan), 4,4'-Dihydroxybenzophenon und Hydrochinon enthält, jeweils bezogen auf das Gesamtgewicht der Komponente (B1) im Reaktionsgemisch (R_{G}). Bei diesen Ausführungen ist Bisphenol A und 4,4'-Dihydroxydiphenlysulfon als Komponente (B1) besonders bevorzugt, wobei Bisphenol A am Meisten bevorzugt ist.

In einer weiteren besonders bevorzugten Ausführungsform besteht Komponente (B1) im Wesentlichen aus Bisphenol A. In einer weiteren besonders bevorzugten Ausführungsform besteht Komponente (B1) aus Bisphenol A.

Da das Reaktionsgemisch (R_{G}) als Komponente (C) Kaliumkarbonat enthält, können die Hydroxygruppen der als Komponente (B1) eingesetzten Dihydroxyverbindungen im Reaktionsgemisch (R_{G}) teilweise in deprotonierter Form vorliegen.

In einer Ausführungsform der vorliegenden Erfindung enthält das Reaktionsgemisch (R_{G}) kein 4,4`-Dihydroxybiphenyl.

### Komponente (C)

Das Reaktionsgemisch (R_{G}) enthält als Komponente (C), die auch als Karbonatkomponente bezeichnet wird, Kaliumkarbonat. Das Kaliumkarbonat ist bevorzugt wasserfrei.

Es ist erfindungswesentlich, dass als Komponente (C) ein Kaliumkarbonat mit einer volumengewichteten mittleren Teilchengröße von 20 nm bis 25 µm, bestimmt mit einem Partikelgrößenmessgerät in einer Suspension des Kaliumkarbonats in einer Mischung aus Chlorbenzol und Sulfolan (60/40), verwendet wird.

Das Kaliumkarbonat kann als Reinstoff oder als technisches Produkt eingesetzt werden, das bis zu 2 Gew.-%, bevorzugt bis zu 1 Gew.-% und besonders bevorzugt bis zu 0,5 Gew.-% Verunreinigungen enthalten kann, jeweils bezogen auf das Gesamtgewicht des eingesetzten Kaliumkarbonats. Die gegebenenfalls im Kaliumkarbonat enthaltenen Verunreinigungen sind in den Gew-% Angaben in Bezug auf die Komponente (C) mit enthalten.

In einer bevorzugten Ausführungsform besteht Komponente (C) im Wesentlichen aus Kaliumkarbonat. Unter "bestehend im Wesentlichen aus" wird vorliegend verstanden, dass die Komponente (C) mehr als 99 Gew.-%, bevorzugt mehr als 99,5 Gew.-%, insbesondere bevorzugt mehr als 99,9 Gew.-% Kaliumkarbonat enthält, jeweils bezogen auf das Gesamtgewicht der Komponente (C) im Reaktionsgemisch (R_{G}).

In einer besonders bevorzugten Ausführungsform besteht Komponente (C) aus Kaliumkarbonat.

Weiterhin ist es besonders bevorzugt, dass das Reaktionsgemisch (R_{G}) neben der Komponente (C) keine weiteren Karbonatverbindungen, insbesondere kein Natriumkarbonat oder Natriumhydrogenkarbonat enthält. In einer bevorzugten Ausführungsform enthält das Reaktionsgemisch (R_{G}) kein Natriumkarbonat und kein Natriumhydrogenkarbonat.

Die volumengewichtete mittlere Teilchengröße (D[4,3]) des Kaliumkarbonats wird dabei bestimmt mit einem Partikelgrößenmessgerät in einer Suspension des Kaliumkarbonats in einer Mischung aus Chlorbenzol und Sulfolan. Die volumengemittelte Partikelgröße (D[4,3]) kann beispielsweise mit einem Mastersizer 2000 der Firma Malvern an einer Suspension der Partikel in Chlorbenzol/Sulfolan (60/40) bestimmt werden.

Besonders bevorzugt ist Kaliumkarbonat mit einer volumengemittelten Partikelgröße (D[4,3]) kleiner 15 µm. Insbesondere bevorzugtes Kaliumkarbonat weist eine volumengemittelte Partikelgröße im Bereich von 20 nm bis 15 µm auf.

Gegenstand der vorliegenden Erfindung ist somit auch ein Verfahren, bei dem das Kaliumcarbonat eine volumengemittelte Partikelgröße im Bereich von 20 nm bis 15 µm, aufweist.

### Komponente (D)

Gegebenenfalls enthält das Reaktionsgemisch (R_{G}) als Komponente (D) mindestens ein aprotisches polares Lösungsmittel. Unter "mindestens ein aprotisches polares Lösungsmittel" werden erfindungsgemäß genau ein aprotisches polares Lösungsmittel sowie Gemische aus zwei oder mehreren aprotischen polaren Lösungsmitteln verstanden.

Als aprotisches polares Lösungsmittel sind beispielsweise Anisol, Dimethylformamid, Dimethylsulfoxid, Sulfolan, N-Methyl-2-Pyrrolidon, N-Ethyl-2-Pyrrolidon sowie Mischungen dieser Lösungsmittel geeignet.

Als aprotisches polares Lösungsmittel sind N-Methyl-2-Pyrrolidon, N-Ethyl-2-Pyrrolidon sowie Mischungen dieser Lösungsmittel bevorzugt. Besonders bevorzugt als aprotisches polares Lösungsmittel ist N-Methyl-2-Pyrrolidon.

Gegenstand der vorliegenden Erfindung ist somit auch ein Verfahren, bei dem das Reaktionsgemisch (R_{G}) als Komponente (D) mindestens ein aprotisches polares Lösungsmittel ausgewählt aus der Gruppe bestehend aus Anisol, Dimethylformamid, Dimethylsulfoxid, Sulfolan, N-Methyl-2-Pyrrolidon und N-Ethyl-2-Pyrrolidon enthält.

Gegenstand der vorliegenden Erfindung ist somit auch ein Verfahren, bei dem das Reaktionsgemisch (R_{G}) als Komponente (D) N-Methyl-2-Pyrrolidon enthält.

In einer bevorzugten Ausführungsform enthält Komponente (D) mindestens 50 Gew.-% mindestens eines Lösungsmittels ausgewählt aus der Gruppe bestehend aus N-Methyl-2-Pyrrolidon und N-Ethyl-2-Pyrrolidon, bezogen auf das Gesamtgewicht der Komponente (D) im Reaktionsgemisch (R_{G}). Als Komponente (D) ist N-Methyl-2-Pyrrolidon besonders bevorzugt.

In einer weiteren Ausführungsform besteht Komponente (D) im Wesentlichen aus mindestens einem Lösungsmittels ausgewählt aus der Gruppe bestehend aus N-Methyl-2-Pyrrolidon und N-Ethyl-2-Pyrrolidon. Unter "bestehend im Wesentlichen aus" wird vorliegend verstanden, dass die Komponente (D) mehr als 99 Gew.-%, insbesondere bevorzugt mehr als 99,5 Gew.-%, insbesondere bevorzugt mehr als 99,9 Gew.-% mindestens eines aprotischen polaren Lösungsmittels ausgewählt aus der Gruppe bestehend aus N-Methyl-2-Pyrrolidon und N-Ethyl-2-Pyrrolidon enthält, jeweils bezogen auf das Gesamtgewicht der Komponente (D) im Reaktionsgemisch (R_{G}), wobei N-Methyl-2-Pyrrolidon bevorzugt ist.

In einer bevorzugten Ausführungsform besteht Komponente (D) aus N-Methyl-2-Pyrrolidon. N-Methyl-2-Pyrrolidon wird auch als NMP oder N-Methylpyrrolidon bezeichnet.

In einer weiteren bevorzugten Ausführungsform enthält das Reaktionsgemisch neben den aprotischen polaren Lösungsmitteln der Komponente (D) keine weiteren aprotischen polaren Lösungsmittel.

Besonders bevorzugt ist ein Reaktionsgemisch (R_{G}), in dem
die Komponente (A1) mindestens 50 Gew.-%, bevorzugt mindestens 90 Gew.-%, besonders bevorzugt mindestens 95 Gew.-% 4,4`-Dichlordiphenylsulfon enthält, bezogen auf das Gesamtgewicht der Komponente (A1) im Reaktionsgemisch (R_{G}),
die Komponente (B1) mindestens 50 Gew.-%, bevorzugt mindestens 90 Gew.-%, besonders bevorzugt mindestens 95 Gew.-% 4,4`-Dihydroxydiphenylsulfon enthält, bezogen auf das Gesamtgewicht der Komponente (B1) im Reaktionsgemisch (R_{G}),
die Komponente (C) im Wesentlichen aus Kaliumcarbonat mit einer volumengemittelten Partikelgröße von < 25 µm besteht und
die Komponente (D) im Wesentlichen aus N-Methylpyrrolidon besteht.

Weiterhin besonders bevorzugt ist ein Reaktionsgemisch (R_{G}), in dem
die Komponente (A1) mindestens 50 Gew.-%, bevorzugt mindestens 90 Gew.-%, besonders bevorzugt mindestens 95 Gew.-% 4,4`-Dichlordiphenylsulfon enthält, bezogen auf das Gesamtgewicht der Komponente (A1) im Reaktionsgemisch (R_{G}),
die Komponente (B1) mindestens 50 Gew.-%, bevorzugt mindestens 90 Gew.-%, besonders bevorzugt mindestens 95 Gew.-% Bisphenol A enthält, bezogen auf das Gesamtgewicht der Komponente (B1) im Reaktionsgemisch (R_{G}),
die Komponente (C) im Wesentlichen aus Kaliumcarbonat mit einer volumengemittelten Partikelgröße von < 25 µm besteht und
die Komponente (D) im Wesentlichen aus N-Methylpyrrolidon besteht.

Das Verhältnis der Komponenten (A1) und (B1) im Reaktionsgemisch (R_{G}) kann in weiten Bereichen variieren. Bevorzugt liegt das molare Verhältnis der Komponente (B1) zu (A1) im Bereich von 0,95 bis 1,05 zu 1, bevorzugt im Bereich von 0,97 bis 1,03 zu 1.

### Polyarylenethersulfon-Polymer

Zur Herstellung des erfindungsgemäßen Polyarylenethersulfon-Polymers wird das Reaktionsgemisch (R_{G}) unter Bedingungen der sogenannten Karbonatmethode zur Reaktion gebracht. Die Umsetzung (Polykondensationsreaktion) erfolgt dabei im Allgemeinen bei Temperaturen im Bereich von 80 bis 250 °C, bevorzugt im Bereich von 100 bis 220 °C, wobei die Obergrenze der Temperatur durch den Siedepunkt des aprotischen polaren Lösungsmittels (Komponente D) bei Normaldruck (1013,25 mbar) bestimmt wird. Die Umsetzung wird im Allgemeinen bei Normaldruck durchgeführt. Die Umsetzung erfolgt vorzugsweise in einem Zeitintervall von 2 bis 12 Stunden, insbesondere im Bereich von 3 bis 10 Stunden.

Die Isolierung des erfindungsgemäß erhaltenen Polyarylenethersulfon-Polymers kann beispielsweise durch Fällung der Polymerlösung in Wasser oder Gemischen von Wasser mit weiteren Lösungsmitteln erfolgen. Das ausgefällte Polyarylenethersulfon-Polymer kann anschließend mit Wasser extrahiert und danach getrocknet werden. In einer Ausführungsform der Erfindung kann die Fällung auch in einem sauren Medium vorgenommen werden. Geeignete Säuren sind beispielsweise organische oder anorganische Säuren, beispielsweise Carbonsäuren wie Essigsäure, Propionsäure, Bernsteinsäure oder Zitronensäure sowie Mineralsäuren wie beispielsweise Salzsäure, Schwefelsäure oder Phosphorsäure.

Durch das erfindungsgemäße Verfahren werden Polyarylenethersulfon-Polymere mit niedrigen Polydispersitäten (Q) erhalten.

Das Polyarylenethersulfon-Polymer weist im Allgemeinen eine Polydispersität (Q) von ≤ 4, bevorzugt von ≤ 3,5 auf.

Die Polydispersität (Q) ist definiert als Quotient aus dem gewichtsmittleren Molekulargewicht (Mw) und dem zahlenmittleren Molekulargewicht (Mₙ). In einer bevorzugten Ausführungsform liegt die Polydispersität (Q) des Polyarylenethersulfon-Polymers im Bereich von 2,0 bis ≤ 4, bevorzugt im Bereich von 2,0 bis ≤ 3,5.

Das gewichtsmittlere Molekulargewicht (M_{W}) und das zahlenmittlere Molekulargewicht (Mₙ) werden mittels Gelpermeationschromatographie gemessen.

Die Polydispersität (Q) und die mittleren Molekulargewichte des Polyarylenethersulfon-Polymers wurden mittels Gelpermeationschromatographie (GPC) gemessen. Als Lösungsmittel wurde Dimethylacetamid (DMAc) verwendet und gegen engverteiltes Polymethylmethacrylat als Standard gemessen.

Geeignete Herstellungsverfahren, für die vorgenannten Polyarylenethersulfon-Polymeren, sind dem Fachmann an sich bekannt und beispielsweise in Herman F. Mark, "Encyclopedia of Polymer Science and Technology", third edition, Volume 4, 2003, Kapitel "Polysulfones" auf den Seiten 2 bis 8 sowie in Hans R. Kricheldorf, "Aromatic Polyethers" in: Handbook of Polymer Synthesis, second edition, 2005 auf den Seiten 427 bis 443 beschrieben.

Bevorzugte Polyarylenethersulfon-Polymere sind solche, die mindestens eine der folgenden Bausteine Ia bis Ib als wiederkehrende Struktureinheiten enthalten:

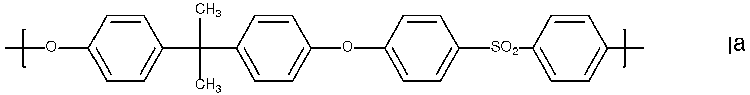

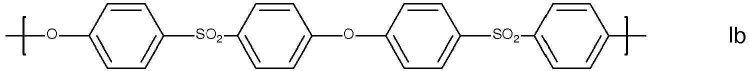

Es ist außerdem besonders bevorzugt, wenn das Polyarylenethersulfon-Polymer im Wesentlichen aus mindestens einer Sorte Bausteine ausgewählt aus der Gruppe Ia und Ib aufgebaut sind.

Besonders bevorzugt sind Polyarylenethersulfon-Polymere, die aus Wiederholungseinheiten der Formel Ia aufgebaut sind. Diese Polyarylenethersulfon-Polymere werden auch als Polysulfon (PSU) bezeichnet.

Weiterhin besonders bevorzugt sind Polyarylenethersulfon-Polymere, die aus Wiederholungseinheiten der Formel Ib aufgebaut sind. Diese Polyarylenethersulfon-Polymere werden auch als Polyethersulfon (PESU) bezeichnet.

Abkürzungen wie PESU und PSU entsprechen im Rahmen der vorliegenden Erfindung der DIN EN ISO 1043-1 (Kunststoffe - Kennbuchstaben und Kurzzeichen - Teil 1: Basis-Polymere und ihre besonderen Eigenschaften (ISO 1043-1:2001); Deutsche Fassung EN ISO 1043-1:2002).

Weiterhin besonders bevorzugt sind Copolymere oder Blockcopolymere, die aus Wiederholungseinheiten der Formeln Ia und Ib aufgebaut sind.

Das nach dem erfindungsgemäßen Verfahren erhältliche Polyarylenethersulfon-Polymer weist im Allgemeinen gewichtsmittlere Molekulargewichte (M_{W}) von 10 000 bis 150 000 g/mol, bevorzugt im Bereich von 15 000 bis 120 000 g/mol, besonders bevorzugt im Bereich von 18 000 bis 100 000 g/mol auf. Die gewichtsmittleren Molekulargewichte (M_{W}) werden mittels Gelpermeationschromatographie (GPC) gemessen. Die Messung erfolgt dabei wie vorstehend beschrieben.

Die Polyarylenethersulfon-Polymere weisen in Abhängigkeit von den Reaktionsbedingungen und den molaren Verhältnissen der Komponenten (A1) und (B1) im Allgemeinen entweder Halogenendgruppen, insbesondere Chlorendgruppen, oder veretherte Endgruppen, insbesondere Alkyletherendgruppen, auf. Die veretherten Endgruppen sind durch Umsetzung der OH- bzw. Phenolat-Endgruppen mit geeigneten Veretherungsmitteln erhältlich.

Geeignete Veretherungsmittel sind beispielsweise monofunktionelles Alkyl- oder Arylhalogenid, beispielsweise C₁-C₆-Alkylchlorid, -bromid oder -iodid, bevorzugt Methylchlorid, oder Benzylchlorid, -bromid oder -iodid oder Mischungen davon. Bevorzugte Endgruppen des erfindungsgemäßen Polyarylenethersulfon-Polymere sind Halogenendgruppen, insbesondere Chlor, sowie Alkoxyendgruppen, insbesondere Methoxy, Aryloxyendgruppen, insbesondere Phenoxy, oder Benzyloxy.

Aufgrund der guten Hydrolysebeständigkeit, begründet in der geringen Hydrophilie, werden Polyarylenethersulfon-Polymere, besonders lineare Polyarylenethersulfon-Polymere, seit vielen Jahren als Membranmaterialien verwendet. So beschreiben zum Beispiel S. Savariar et al., Desalination 144 (2002) 15 bis 20, die Verwendung von Polysulfon zur Herstellung von Dialysemembranen. Da Polysulfon relativ wenig Wasser absorbiert, wird bei der Herstellung solcher Dialysemembranen üblicherweise ein hydrophiles Polymer, wie beispielsweise Polyvinylpyrrolidon (PVP) als Additiv verwendet.

Die DE-A 10 2005 001 599 beschreibt funktionalisierte, verzweigte Polyarylenethersulfon-Copolymere, die sulfonierte und nicht-sulfonierte Einheiten enthalten. Die Herstellung der sulfonierten Polyarylenethersulfon-Copolymere erfolgt über eine Sulfonierung aus den entsprechenden verzweigten Polyarylenethersulfon-Copolymeren. Die Veröffentlichungsschrift erwähnt die Verwendung der sulfonierten Copolymere zur Herstellung von Membranen. Außerdem finden Polymerblends aus den vorgenannten sulfonierten Polyarylenethersulfon-Copolymeren und zahlreichen Blendpartnern Erwähnung, wobei unter anderem Polyvinylpyrrolidon aufgezählt wird. Die DE-A 10 2005 001 599 offenbart jedoch weder Blends aus nicht-sulfonierten verzweigten Polyarylenethersulfon-Polymeren noch geht sie auf die besonderen Anforderungen bei der Verwendung zur Herstellung von Hohlfasermembranen ein.

In einer bevorzugten Ausführungsform werden Polyarylenethersulfon-Polymere im die erfindungsgemäßen Verfahren zur Herstellung der Polyarylenethersulfon-Polymere nicht sulfoniert. In einer weiteren bevorzugten Ausführungsform weisen die nach dem erfindungsgemäßen Verfahren erhältlichen Polyarylenethersulfon-Polymere somit keine freien Sulfonsäuregruppen auf.

Die Herstellung von Hohlfasermembranen für Dialysemodule stellt besondere Anforderungen an das zur Herstellung verwendeter Polymermaterial. Hierbei sind insbesondere die Trennleistung und die Ausschlussgrenze betreffend das Molekulargewicht und somit die Fähigkeit, bestimmte Toxine bei der Dialyse herauszufiltern, sowie eine hohe Beständigkeit unter den Bedingungen der Sterilisation und eine hohe Beständigkeit der Eigenschaften der Membran über einen langen Zeitraum zu nennen.

Beispielsweise beschreibt die EP 0 509 663 B2 Dialysemodule mit selektiv durchlässigen Hohlfasermembranen auf Basis einer Mischung von Polyethersulfon und einem hydrophilen Polymer wie zum Beispiel Polyvinylpyrrolidon oder Polyethylenglykol. Die EP 0 615 778 A1 offenbart ein Verfahren zur Herstellung hydrophiler Membrane unter Verwendung von hydrophoben Polymeren wie Polyethersulfonen und hydrophilen Polymeren unter Verwendung von Polyvinylpyrrolidon.

Die mechanischen Eigenschaften im Dauergebrauch, die Verarbeitbarkeit bei der Herstellung und die Trennleistung, insbesondere die Ausschlussgrenze (definiert als Molekulargewicht, oberhalb dessen eine Abtrennung erfolgt) sind bei den in bekannten Dialysemembranen verwendeten Materialien jedoch nicht in allen Fällen zufriedenstellend.

Die Herstellung von Membranen unter Verwendung des nach dem erfindungsgemäßen Verfahren erhältlichen Polyarylenethersulfon-Polymers kann durch Anwendung dem Fachmann an sich bekannter Schritte oder Verfahren erfolgen.

Gegenstand der vorliegenden Erfindung ist auch ein Verfahren zur Herstellung einer Membran umfassend die folgenden Schritte:
(i) Bereitstellen einer Lösung enthaltend das erfindungsgemäße Polyarylenethersulfon-Polymer und mindestens ein aprotisches polares Lösungsmittel und
(ii) Trennung des erfindungsgemäßen Polyarylenethersulfon-Polymers vom aprotischen polaren Lösungsmittel unter Ausbildung einer Membran.

Um die Hydrophilie der Membran zu steigern, kann der in Verfahrensschritt (i) bereitgestellten Lösung mindestens ein hydrophiles Polymer zugegeben werden. Ein geeignetes hydrophiles Polymer ist beispielsweise Polyvinylpyrrolidon mit einem gewichtsmittleren Molekulargewicht (M_{w}) im Bereich von 10 000 bis 2 000 000 g/mol, bevorzugt im Bereich von 200 000 bis 1 600 000 g/mol.

Gegenstand der vorliegenden Erfindung ist auch ein Verfahren zur Herstellung einer Membran umfassend die folgenden Schritte:
(i) Bereitstellen einer Lösung enthaltend das erfindungsgemäße Polyarylenethersulfon-Polymer, mindestens ein hydrophiles Polymer und mindestens ein aprotisches polares Lösungsmittel und
(ii) Trennung der Mischung aus dem erfindungsgemäßen Polyarylenethersulfon-Polymers und dem hydrophilen Polymer vom aprotischen polaren Lösungsmittel unter Ausbildung einer Membran.

In Schritt (i) erfolgt somit die Bereitstellung einer Lösung des Polyarylenethersulfon-Polymers und gegebenenfalls des hydrophilen Polymers in einem aprotischen polaren Lösungsmittel. Als aprotische polare Lösungsmittel kommen solche in Betracht, in denen die Polyarylenethersulfon-Polymere löslich sind, wobei unter "löslich" verstanden wird, dass sich bei Raumtemperatur (20°C) mindestens 10 Gew.-%, vorzugsweise mindestens 20 Gew.-%, insbesondere mindestens 25 Gew.-% des Polyarylenethersulfon-Polymers bezogen auf das Gesamtgewicht der Lösung im aprotischen polaren Lösungsmittel lösen.

Vorzugsweise wird die in Schritt (i) erhaltene Lösung vor der Durchführung von Schritt (ii) entgast. Der Fachmann wählt übliche, allgemein bekannte Verfahren zur Entgasung von Flüssigkeiten.

Bevorzugte aprotische polare Lösungsmittel zur Bereitstellung der Lösung in Schritt (i) sind N-Methylpyrrolidon, Dimethylacetamid, Dimethylsulfoxid, Dimethylformamid und Sulfolan (Tetrahydrothiophen-1,1-dioxid). Besonders bevorzugt sind N-Methylpyrrolidon, Dimethylacetamid, Dimethylsulfoxid, und Dimethylformamid.

Die Herstellung der Lösung in Schritt (i) kann in üblichen Behältnissen erfolgen, insbesondere in solchen, welche eine Rührvorrichtung und bevorzugt eine Vorrichtung zur Temperaturkontrolle umfassen. Das Herstellen der Lösung gemäß Schritt (i) des erfindungsgemäßen Verfahrens erfolgt bevorzugt unter Rühren. Das Auflösen des erfindungsgemäßen Polyarylenethersulfon-Polymers und gegebenenfalls des hydrophilen Polymers kann nacheinander oder gleichzeitig erfolgen.

Die Dauer des Schrittes (i) kann in einem weiten Bereich variieren. Vorzugsweise beträgt die Dauer des Schrittes (i) von 10 Minuten bis 48 Stunden, insbesondere von 10 Minuten bis 12 Stunden, besonders bevorzugt von 15 Minuten bis 6 Stunden. Der Fachmann wählt die Dauer des Schrittes (i), so dass eine homogene Lösung des erfindungsgemäßen Polyarylenethersulfon-Polymers und gegebenenfalls des hydrophilen Polymers im aprotischen polaren Lösungsmittel erhalten wird.

Vorzugsweise erfolgt die Durchführung des Schrittes (i) bei erhöhter Temperatur, insbesondere von 20°C bis 120°C, vorzugsweise von 40°C bis 100°C. Der Fachmann wählt die Temperatur insbesondere in Abhängigkeit vom aprotischen polaren Lösungsmittel.

Die bevorzugte Konzentration des erfindungsgemäßen Polyarylenethersulfon-Polymers und gegebenenfalls des hydrophilen Polymers im aprotischen polaren Lösungsmittel hängt insbesondere von der Natur des Schrittes (ii) ab.

Vorzugsweise enthält die in Schritt (i) bereitgestellte Lösung von 5 bis 40 Gew.-%, insbesondere von 10 bis 30 Gew.-%, des erfindungsgemäßen Polyarylenethersulfon-Polymers, bezogen auf das Gesamtgewicht der Lösung.

Für den Fall das die in Schritt (i) bereitgestellte Lösung zusätzlich ein hydrophiles Polymer enthält beträgt die Summe des erfindungsgemäßen Polyarylenethersulfon-Polymers und des hydrophilen Polymers 5 bis 40 Gew.-%, insbesondere von 10 bis 30 Gew.-%, bezogen auf das Gesamtgewicht der Lösung.

In diesem Fall liegt das Gew.-%-Verhältnis von erfindungsgemäßem Polyarylenethersulfon-Polymer zu hydrophilem Polymer in der Lösung in Schritt (i) im Allgemeinen im Bereich von 98 zu 2 bis 50 zu 50.

Anschließend erfolgt gemäß Schritt (ii) die Trennung des erfindungsgemäßen Polyarylenethersulfon-Polymers bzw. der Mischung aus dem erfindungsgemäßen Polyarylenethersulfon-Polymer und dem hydrophilen Polymer vom aprotischen polaren Lösungsmittel unter Ausbildung einer Membran.

Grundsätzlich kann die Form der Membran variieren, wobei die Membran insbesondere in Form einer Folie, in Form einer Schicht auf einem Träger oder in Form einer Faser vorliegt. Im Rahmen einer bevorzugten Ausführungsform ist die Membran gemäß der vorliegenden Erfindung eine Hohlfasermembran, insbesondere eine Hohlfasermembran für Dialyseanwendungen.

Sofern mittels des erfindungsgemäßen Verfahrens Hohlfasermembranen hergestellt werden, wird Schritt (ii) vorzugsweise mittels Nassverspinnen durchgeführt, das heißt, die in Schritt (i) hergestellte Lösung wird in Schritt (ii) zu einer Faser nassversponnen. Sofern in Schritt (ii) ein Nassspinnverfahren zur Anwendung kommt, ist ein Trockendüsen-Nassspinnverfahren besonders bevorzugt.

Unter Trockendüsen-Nassspinnverfahren wird im Rahmen der vorliegenden Erfindung verstanden, dass Schritt (ii) folgende Schritte umfasst:
(ii-a) Extrudieren der Lösung aus Schritt (i) aus einer Düse in eine gasförmige Atmosphäre, insbesondere Luft, optional in Gegenwart einer Kernflüssigkeit und
(ii-b) Einführen der in Schritt (ii-a) extrudierten Faser in mindestens ein Koagulationsbad umfassend jeweils ein Behälter und eine Koagulationsflüssigkeit.

Gegenstand der vorliegenden Erfindung ist somit auch ein Verfahren, bei dem Schritt (ii) folgende Schritte umfasst:
(ii-a) Extrudieren der Lösung aus Schritt (i) aus einer Düse in eine gasförmige Atmosphäre optional in Gegenwart einer Kernflüssigkeit unter Erhalt einer extrudierten Faser und
(ii-b) Einführen der in Schritt (ii-a) extrudierten Faser in mindestens ein Koagulationsbad umfassend einen Behälter und eine Koagulationsflüssigkeit.

Dabei kommt üblicherweise eine spezielle Düse mit Kern zum Einsatz, durch den während des Verspinnens eine Kernflüssigkeit gespült wird. Unter Kernflüssigkeit ist im Rahmen der vorliegenden Erfindung eine Flüssigkeit zu verstehen, die im Kern der Spinndüse mit der in Schritt (i) bereitgestellten Lösung in Kontakt kommt. Die Kernflüssigkeit besitzt koagulierende Eigenschaften und dient der Stabilisierung des Kerns der Hohlfaser während des Nassspinnverfahrens.

Der Abstand zwischen Düse und Koagulationsflüssigkeit im Koagulationsbad wird als Trockenzone bezeichnet und beträgt vorzugsweise von 0,1 bis 100 cm, insbesondere von 0,5 bis 50 cm, vorzugsweise von 1 bis 30 cm.

Die Struktur der Poren in der Hohlfasermembran wird durch die Koagulationsflüssigkeit beeinflusst, in der das erfindungsgemäße Polyarylenethersulfon-Polymer bzw. die Mischung aus dem erfindungsgemäßen Polyarylenethersulfon-Polymer und dem hydrophilen Polymer vorzugsweise nicht oder nicht vollständig löslich ist. Die Koagulationsflüssigkeit verursacht ein zumindest partielles Ausfällen des zu verspinnenden Polymers im Koagulationsbad in Form einer Faser.

Als Koagulationsflüssigkeiten und als Kernflüssigkeiten kommen vorzugsweise Flüssigkeiten in Betracht, welche mit dem aprotischen polaren Lösungsmittel der in Schritt (i) bereitgestellten Lösung vollständig mischbar sind unter der Voraussetzung, dass das erfindungsgemäße Polyarylenethersulfon-Polymer bzw. die Mischung aus dem erfindungsgemäßen Polyarylenethersulfon-Polymer und dem hydrophilen Polymer, in der Koagulationsflüssigkeit nicht oder teilweise nicht löslich ist.

Der Fachmann wählt Kern- und Koagulationsflüssigkeit in Bezug auf das aprotische polare Lösungsmittel der in Schritt (i) bereitgestellten Lösung so, dass die Flüssigkeiten einerseits mischbar sind und andererseits im Anschluss an das Verspinnen abtrennbar, das heißt in reiner Form wieder gewinnbar, sind, wobei eine destillative Abtrennung bevorzugt ist.

Vorzugsweise wird als Kernflüssigkeit eine Mischung aus dem aprotischen polaren Lösungsmittel und deionisiertem Wasser eingesetzt, insbesondere N-Methylpyrrolidon und Wasser. Das Mischungsverhältnis (Gewichtsverhältnis) von NMP zu Wasser beträgt vorzugsweise von 15:1 bis 1:15, besonders bevorzugt von 5:1 bis 1:5, insbesondere 2:1 bis 1:2.

Als Koagulationsflüssigkeit wird vorzugsweise mindestens ein aliphatischer Alkohol oder Wasser oder ein Gemisch aus den beiden vorgenannten Verbindungen eingesetzt. Besonders bevorzugt wird im Rahmen des Schrittes (ii-b) des erfindungsgemäßen Verfahrens in einem ersten Koagulationsbad ein aliphatischer Alkohol, insbesondere Ethanol oder Isopropanol, gegebenenfalls im Gemisch mit Wasser, und in einem zweiten Koagulationsbad Wasser eingesetzt.

Vorzugsweise wird das erfindungsgemäße Polyarylenethersulfon-Polymer in dem erfindungsgemäßen Verfahren zur Herstellung einer Membran in wasserfreier Form eingesetzt. Unter "wasserfrei" soll verstanden werden, dass der Wassergehalt in der in Schritt (i) bereitgestellten Lösung weniger als 5 Gew.-%, vorzugsweise weniger als 2 Gew.-%, insbesondere weniger als 1 Gew.-% beträgt, bezogen auf das Gesamtgewicht der Lösung.

Zur Trocknung des erfindungsgemäßen Polyarylenethersulfon-Polymers kommen dem Fachmann bekannte Verfahren in Betracht, insbesondere die Anwendung von erhöhter Temperatur und/oder Vakuum.

Nach der Durchführung der Schritte (i) und (ii) des erfindungsgemäßen Verfahrens erfolgt optional (iii) die Aufbereitung der Membran, wobei unter Aufbereitung ein oder mehrere Schritte ausgewählt aus Reinigung, Auswaschen und Nachvernetzung durchgeführt werden.

Gegenstand der vorliegenden Erfindung ist auch die Membran, die nach dem erfindungsgemäßen Verfahren erhältlich ist.

Die erfindungsgemäßen Membranen, insbesondere die erfindungsgemäßen Hohlfasermembranen, weisen eine hohe mechanische Belastbarkeit im Dauergebrauch auf. Sie besitzen eine niedrige Ausschlussgrenze bei der Ultrafiltration, insbesondere der Dialyse.

Gegenstand der vorliegenden Erfindung ist auch eine Membran enthaltend das erfindungsgemäße Polyarylenethersulfon-Polymer. Weiterhin Gegenstand der vorliegenenden Erfindung ist eine Membran, erhältlich nach dem erfindungsgemäßen Verfahren zur Herstellung einer Membran.

Gegenstand der vorliegenden Erfindung ist somit auch eine Hohlfaser für die Dialyse, die nach dem erfindungsgemäßen Verfahren erhältlich ist.

Gegenstand der vorliegenden Erfindung ist weiterhin die Verwendung des nach dem erfindungsgemäßen Verfahren erhältlichen Polyarylenethersulfon-Polymers zur Herstellung von Membranen.

Die vorliegende Erfindung wird durch die nachfolgenden Ausführungsbeispiele näher erläutert, ohne sie jedoch hierauf zu beschränken.

### Eingesetzte Komponenten:

| | |
|---|---|
| DCDPS: | 4,4'-Dichlordiphenylsulfon, |
| Bisphenol A: | 2,2-Bis-(4-hydroxyphenyl)-propan |
| Dihydroxybiphenyl: | 4,4`-Dihydroxybiphenyl |
| Kaliumkarbonat: | K₂CO₃, wasserfrei, volumengemittelte Partikelgröße (siehe Tabelle) |
| Natriumkarbonat: | Na₂CO₃, wasserfrei, volumengemittelte Partikelgröße (siehe Tabelle) |
| NMP: | N-Methylpyrrolidon, wasserfrei, |

Mₙ, Mw und Q wurden wie vorstehend beschrieben bestimmt.

Die Viskositätszahl VZ wurde nach DIN ISO 1628-1 in einer 1-Gew.-%igen NMP-Lösung bei 25°C gemessen.

Die Isolierung der Polyarylethersulfon-Polymere erfolgt durch Zertropfung einer NMP-Lösung der Polymere in VE-Wasser bei Raumtemperatur (20°C). Die Fallhöhe beträgt 0,5 m. Der Durchsatz beträgt ca. 2,5 I pro Stunde. Die erhaltenen Perlen werden anschließend bei 85 °C für zwanzig Stunden mit Wasser extrahiert (Wasserdurchsatz 160 l/h). Danach werden die Perlen bei einer Temperatur unterhalb der Glastemperatur T_{g} auf eine Restfeuchte von weniger als 0,1 Gew.-% getrocknet.

Die volumengemittelte Partikelgröße (D[4,3]) des verwendeten Kaliumkarbonats bzw. Natriumkarbonats wurde mit einem Mastersizer 2000 der Firma Malvern an einer Suspension der Partikel in Chlorbenzol/Sulfolan (60/40) bestimmt.

Die Molekulargewichtsverteilung der Polyarylethersulfon-Polymere wurde durch GPC-Messung in DMAc bestimmt. Die Molekulargewichte der Polyarylethersulfon-Polymere wurden auch durch Viskositätsmessungen (1 gew.-%-ige Lösung in NMP) charakterisiert.

Der Anteil an cyclischem Dimer wurde mittels HPLC mit THF als flüssiger Phase und PLGEL^{®} Säulen bestimmt.

Die vorteilhaften Eigenschaften der erfindungsgemäßen Polyarylethersulfon-Polymere für Membrananwendungen wurden anhand folgender Versuche demonstriert.

Die Lösungen zur Herstellung der Hohlfasermembran wurden wie folgt hergestellt: Zuerst wurde das Polyarylethersulfon-Polymer in NMP gelöst. Anschließend wurde Polyvinylpyrrolidon (PVP, M_{w}=360.000 g/mol, T_{g}=176°C, Fa. Merck) zu dieser Lösung hinzugefügt, bis die Zusammensetzung 16/10/74 Gew.-% (Polyarylethersulfon-Polymere /PVP/NMP) erreicht wurde. Diese Lösung wurde anschließend 48 h bei Raumtemperatur gerührt. Vor dem Verspinnen wurden die Lösungen 1 Tag entgast.

Die Herstellung der Hohlfasermembranen erfolgte im Trockendüsen-Nassspinnverfahren gemäß der Publikation Q.Tang, T.S. Chung, Y.E. Santoso, Journal of Membrane Science, 2007, 290, Seiten 153-163.

Die Zusammensetzung der Kernflüssigkeit war dabei 55:45 Gewichtsteile NMP:deionisiertes Wasser. Die Distanz zwischen der Spinndüse und dem Fällbad betrug 20 cm. Zur Fällung wurde ein 2-stufiger Fällprozess mit Isopropanol als erste Koagulationsflüssigkeit im ersten Fällbad und Wasser als zweite Koagulationsflüssigkeit im zweiten Fällbad verwendet. Die Abzugsgeschwindigkeit der Fasern war gleich der Spinngeschwindigkeit (8,6 cm/s). Anschließend wurden die Fasern 3 Tage in Wasser gelagert. Vor der Zug-Dehnungsmessung werden die Fasern aus dem Wasser entnommen, äußerlich anhaftendes Wasser wird entfernt, danach werden die Proben 48 Stunden bei 23°C und 50% relativer Luftfeuchtigkeit gelagert. Danach werden die Fasern auf eine Länge von 150 mm geschnitten und in einer Zwick/Roell Zug-Dehnungsapparatur Z010 mit einer Dehnrate von 20 mm/min bis zum Bruch gezogen.

Die Ergebnisse der Prüfungen sind in Tabellen 1 aufgeführt.

### Herstellung der Polyarylethersulfon-Polymere:

### Vergleich: Polysulfon V1

In einen 4L-Reaktor mit Innenthermometer, Gaseinleitungsrohr, Rückflusskühler mit Wasserabscheider wurden 430,62 g DCDPS, 342,08 g Bisphenol A und 222,86 g Kaliumkarbonat einer volumengemittelten Partikelgröße von 32,4 µm unter Stickstoffatmosphäre in 641 ml NMP suspendiert. Innerhalb 1 h wird der Ansatz auf 190°C erhitzt. Als Reaktionsdauer wird die Verweilzeit bei 190°C betrachtet. Das Reaktionswasser wird abdestilliert und der Füllstand durch Zufügen von NMP während der Reaktion konstant gehalten. Nach 8 h Reaktionszeit wird die Reaktion durch Verdünnung mit kaltem NMP (1609 ml) abgebrochen, anschließend wird bei 140°C für 45 Minuten Methylchlorid (10 l/h) in den Ansatz eingeleitet (45 Minuten). Danach wird Stickstoff eingeleitet (20 l/h) und der Ansatz abgekühlt. Das entstandene Kaliumchlorid wird abfiltriert.

### Erfindungsgemäß: Polysulfon 2

In einen 4L-Reaktor mit Innenthermometer, Gaseinleitungsrohr, Rückflusskühler mit Wasserabscheider wurden 430,62 g DCDPS, 342,08 g Bisphenol A und 222,86 g Kaliumkarbonat einer volumengemittelten Partikelgröße von 22,4 µm unter Stickstoffatmosphäre in 641 ml NMP suspendiert. Innerhalb 1 h wird der Ansatz auf 190°C erhitzt. Als Reaktionsdauer wird die Verweilzeit bei 190°C betrachtet. Das Reaktionswasser wird abdestilliert und der Füllstand durch Zufügen von NMP während der Reaktion konstant gehalten. Nach 6,5 h Reaktionszeit wird die Reaktion durch Verdünnung mit kaltem NMP (1609 ml) abgebrochen, anschließend wird bei 140°C für 45 Minuten Methylchlorid (10 l/h) in den Ansatz eingeleitet (45 Minuten). Danach wird Stickstoff eingeleitet (20 l/h) und der Ansatz abgekühlt. Das entstandene Kaliumchlorid wird abfiltriert.

### Erfindungsgemäß: Polysulfon 3

In einen 4L-Reaktor mit Innenthermometer, Gaseinleitungsrohr, Rückflusskühler mit Wasserabscheider wurden 430,62 g DCDPS, 342,08 g Bisphenol A und 222,86 g Kaliumkarbonat einer volumengemittelten Partikelgröße von 12,4 µm unter Stickstoffatmosphäre in 641 ml NMP suspendiert. Innerhalb 1 h wird der Ansatz auf 190°C erhitzt. Als Reaktionsdauer wird die Verweilzeit bei 190°C betrachtet. Das Reaktionswasser wird abdestilliert und der Füllstand durch Zufügen von NMP während der Reaktion konstant gehalten. Nach 5 h Reaktionszeit wird die Reaktion durch Verdünnung mit kaltem NMP (1609 ml) abgebrochen, anschließend wird bei 140°C für 45 Minuten Methylchlorid (10 l/h) in den Ansatz eingeleitet (45 Minuten). Danach wird Stickstoff eingeleitet (20 l/h) und der Ansatz abgekühlt. Das entstandene Kaliumchlorid wird abfiltriert.

### Vergleich: Polysulfon V4

In einen 4L-Reaktor mit Innenthermometer, Gaseinleitungsrohr, Rückflusskühler mit Wasserabscheider wurden 430,62 g DCDPS, 342,08 g Bisphenol A und 170,91 g Natriumkarbonat einer Partikelgröße von 23,2 µm unter Stickstoffatmosphäre in 641 ml NMP suspendiert. Innerhalb 1 h wird der Ansatz auf 190°C erhitzt. Als Reaktionsdauer wird die Verweilzeit bei 190°C betrachtet. Das Reaktionswasser wird abdestilliert und der Füllstand durch Zufügen von NMP während der Reaktion konstant gehalten. Nach 9 h Reaktionszeit wird die Reaktion durch Verdünnung mit kaltem NMP (1609 ml) abgebrochen, anschließend wird bei 140°C für 45 Minuten Methylchlorid (10 l/h) in den Ansatz eingeleitet (45 Minuten). Danach wird Stickstoff eingeleitet (20 l/h) und der Ansatz abgekühlt. Das entstandene Natriumchlorid wird abfiltriert.

### Vergleich: Polysulfon V5

In einen 4L-Reaktor mit Innenthermometer, Gaseinleitungsrohr, Rückflusskühler mit Wasserabscheider wurden 430,62 g DCDPS, 342,08 g Bisphenol A und 170,91 g Natriumkarbonat einer Partikelgröße von 11,9 µm unter Stickstoffatmosphäre in 641 ml NMP suspendiert. Innerhalb 1 h wird der Ansatz auf 190°C erhitzt. Als Reaktionsdauer wird die Verweilzeit bei 190°C betrachtet. Das Reaktionswasser wird abdestilliert und der Füllstand durch Zufügen von NMP während der Reaktion konstant gehalten. Nach 9 h Reaktionszeit wird die Reaktion durch Verdünnung mit kaltem NMP (1609 ml) abgebrochen, anschließend wird bei 140°C für 45 Minuten Methylchlorid (10 l/h) in den Ansatz eingeleitet (45 Minuten). Danach wird Stickstoff eingeleitet (20 l/h) und der Ansatz abgekühlt. Das entstandene Natriumchlorid wird abfiltriert.

### Vergleich: PPSU V6

In einen 4L-Reaktor mit Innenthermometer, Gaseinleitungsrohr, Rückflusskühler mit Wasserabscheider wurden 574,16 g DCDPS, 379,87 g Dihydroxybiphenyl und 286,09 g Kaliumkarbonat einer Partikelgröße von 23,2 µm unter Stickstoffatmosphäre in 2100 ml NMP suspendiert. Innerhalb 1 h wird der Ansatz auf 190°C erhitzt. Als Reaktionsdauer wird die Verweilzeit bei 190°C betrachtet. Das Reaktionswasser wird abdestilliert und der Füllstand durch Zufügen von NMP während der Reaktion konstant gehalten. Nach 6 h Reaktionszeit wird die Reaktion durch Verdünnung mit kaltem NMP (900 ml) abgebrochen, anschließend wird bei 140°C für 45 Minuten Methylchlorid (10 l/h) in den Ansatz eingeleitet (45 Minuten). Danach wird Stickstoff eingeleitet (20 l/h) und der Ansatz abgekühlt. Das entstandene Kaliumchlorid wird abfiltriert.

**Tabelle 1:**

| Polyarylenethersulfon-Polymer | V1 | 2 | 3 | V4 | V5 | V6 |
|---|---|---|---|---|---|---|
| K₂CO₃ Partikelgröße [µm] | 32,4 | 22,4 | 12,4 | - | - | 23,2 |
| Na₂CO₃ Partikelgröße [µm] | - | - | - | 23,2 | 11,9 | - |
| Reaktionszeit [h] | 8 | 6,5 | 5 | 9 | 9 | 6 |
| VZ [ml/g] | 77,4 | 78,2 | 78,7 | 21,5 | 22,3 | 73,9 |
| Cycl. Dimer [Gew.-%] | 1,07 | 1,08 | 1,08 | - | - | - |
| | | | | | | |
| GPC | | | | | | |
| Mw [g/mol] | 67890 | 68540 | 69450 | - | - | 61400 |
| Mn [g/mol] | 16550 | 21390 | 23450 | - | - | 16140 |
| Mw/Mn | 4,1 | 3,1 | 3,0 | - | - | 3,8 |
| εBruch [%] | 41+/-5 | 67+/-5 | 65+/-4 | - | - | - |

### Hohlfasermembran

Die erfindungsgemäßen Polyarylenethersulfon-Polymere weisen bei kürzerer Reaktionszeit vergleichbare Viskositätszahlen (VZ), aber engere Molekulargewichtsverteilung auf. Aus diesen Polyarylenethersulfon-Polymere hergestellte Hohlfasermembranen weisen überraschenderweise bessere mechanische Eigenschaften auf. Die Versuche V4 und V5 zeigen, dass bei der Verwendung von Natriumkarbonat kein ausreichender Molekulargewichtsaufbau erreicht wird, daher wurden keine weiteren Analysen durchgeführt. Beispiel V6 zeigt, dass PPSU eine breitere Molekulargewichtsverteilung aufweist. Unter den für V1, 2 und 3 gewählten Versuchsbedingungen konnte aus dem Polyarylenethersulfon-Polymer gemäß Beispiel V6 keine Hohlfasermembran hergestellt werden.

## Patentansprüche

1. Verwendung von Kaliumkarbonat mit einer volumengewichteten mittleren Teilchengröße von 20 nm bis 25 µm, bestimmt mit einem Partikelgrößenmessgerät in einer Suspension des Kaliumkarbonats in einer Mischung aus Chlorbenzol und Sulfolan (60/40), zur Einstellung der Polydispersität (Q) auf ≤ 4 in einem Verfahren zur Herstellung eines Polyarylenethersulfon-Polymers, umfassend das Umsetzen eines Reaktionsgemischs (R_{G}) enthaltend die Komponenten:
(A1) eine Dihalogenkomponente, die mindestens 50 Gew.-% mindestens einer Dihalogenverbindung ausgewählt aus der Gruppe bestehend aus 4,4'-Dichlordiphenylsulfon und 4,4'-Difluordiphenylsulfon enthält, bezogen auf das Gesamtgewicht der Komponente (A1) im Reaktionsgemisch (R_{G}),
(B1) eine Dihydroxykomponente, die mindestens 80 Gew.-% mindestens einer Dihydroxyverbindung ausgewählt aus der Gruppe bestehend aus 4,4`-Dihydroxydiphenylsulfon, Bisphenol A, 4,4'-Dihydroxybenzophenon und Hydrochinon enthält, bezogen auf das Gesamtgewicht der Komponente (B1) im Reaktionsgemisch (R_{G}),
wobei die Polydispersität (Q) definiert ist als Quotient aus dem gewichtsmittleren Molekulargewicht (Mw) und dem zahlenmittleren Molekulargewicht (Mₙ), gemessen mittels Gelpermeationschromatographie (GPC) und Dimethylacetamid (DMAc) als Lösungsmittel gegen engverteiltes Polymethylmethacrylat als Standard.

2. Verwendung nach Anspruch 1, wobei die Polydispersität (Q) auf ≤ 3,5 eingestellt wird.

3. Verwendung nach Anspruch 1 oder 2, wobei die Polydispersität (Q) auf einen Bereich von 2,0 bis ≤ 3,5 eingestellt wird.

4. Verwendung nach einem der Ansprüche 1 bis 3, wobei das Kaliumcarbonat eine volumengemittelte Partikelgröße im Bereich von 20 nm bis 15 µm aufweist.

5. Verwendung nach einem der Ansprüche 1 bis 4, wobei das Reaktionsgemisch (R_{G}) als Komponente (D) mindestens ein aprotisches polares Lösungsmittel enthält.

6. Verwendung nach einem der Ansprüche 1 bis 5, wobei das Reaktionsgemisch (R_{G}) als weitere Komponente mindestens ein aprotisches polares Lösungsmittel ausgewählt aus der Gruppe bestehend aus Anisol, Dimethylformamid, Dimethylsulfoxid, Sulfolan, N-Methyl-2-Pyrrolidon und N-Ethyl-2-Pyrrolidon enthält.

7. Verwendung nach einem der Ansprüche 1 bis 6, wobei das Reaktionsgemisch (R_{G}) neben den Dihalogenverbindungen der Komponente (A1) keine weiteren Dihalogenverbindungen enthält.

8. Verwendung nach einem der Ansprüche 1 bis 7, wobei das Reaktionsgemisch (R_{G}) neben den Dihalogenverbindungen der Komponente (B1) keine weiteren Dihydroxyverbindungen enthält.

9. Verwendung nach einem der Ansprüche 1 bis 8, wobei das Reaktionsgemisch (R_{G}), als die Komponenten (A1) und (B1) 4,4'-Dichlordiphenylsulfon und Bisphenol A enthält.

## Claims

1. Use of potassium carbonate having a volume-weighted average particle size of 20 nm to 25 um determined with a particle size measuring instrument in a suspension of the potassium carbonate in a mixture of chlorobenzene and sulfolane (60/40) for adjusting the polydispersity (Q) to ≤ 4 in a process for producing a polyarylene ether sulfone polymer comprising reacting a reaction mixture (R_{G}) comprising the components:
(A1) a dihalogen component comprising not less than 50 wt% of at least one dihalogen compound selected from the group consisting of 4,4'-dichlorodiphenyl sulfone and 4,4'-difluorodiphenyl sulfone, based on the overall weight of component (A1) in the reaction mixture (R_{G}),
(B1) a dihydroxy component comprising not less than 80 wt% of at least one dihydroxy compound selected from the group consisting of 4,4'-dihydroxydiphenyl sulfone, bisphenol A, 4,4'-dihydroxybenzophenone and hydroquinone, based on the overall weight of component (B1) in the reaction mixture (R_{G}),
werein the polydispersity (Q) is defined as the quotient of the weight-average molecular weight (M_{w}) and the number-average molecular weight (Mₙ) measured using gel permeation chromatography (GPC) and dimethylacetamide (DMAc) as solvent against a narrow-distribution polymethyl methacrylate standard.

2. Use according to Claim 1, wherein the polydispersity (Q) is adjusted to ≤ 3.5.

3. Use according to Claim 1 or 2, wherein the polydispersity (Q) is adjusted to a range of 2.0 to ≤ 3.5.

4. Use according to any of Claims 1 to 3, wherein the potassium carbonate has a volume-weighted particle size in the range from 20 nm to 15 µm.

5. Use according to any of Claims 1 to 4, wherein the reaction mixture (R_{G}) comprises as component (D) one or more aprotic polar solvents.

6. Use according to any of Claims 1 to 5, wherein the reaction mixture (R_{G}) comprises as a further component one or more aprotic polar solvents selected from the group consisting of anisole, dimethylformamide, dimethyl sulfoxide, sulfolane, N-methyl-2-pyrrolidone and N-ethyl-2-pyrrolidone.

7. Use according to any of Claims 1 to 6, wherein the reaction mixture (R_{G}) contains no further dihalogen compounds in addition to the dihalogen compounds of component (A1).

8. Use according to any of Claims 1 to 7, wherein the reaction mixture (R_{G}) contains no further dihydroxy compounds in addition to the dihalogen compounds of component (B1).

9. Use according to any of Claims 1 to 8, wherein the reaction mixture (R_{G}) comprises 4,4'-dichlorodiphenylsulfone and bisphenol A as components (A1) and (B1).

## Revendications

1. Utilisation de carbonate de potassium ayant une taille de particule moyennée en volume de 20 nm à 25 µm, déterminée par un granulomètre dans une suspension du carbonate de potassium dans un mélange de chlorobenzène et de sulfolane (60/40), pour ajuster la polydispersité (Q) à ≤ 4 dans un procédé de fabrication d'un polymère de polyarylène-éther-sulfone, comprenant la mise en réaction d'un mélange réactionnel (R_{G}) contenant les composants :
(A1) un composant dihalogène, qui contient au moins 50 % en poids d'au moins un composé dihalogéné choisi dans le groupe constitué par la 4,4'-dichlorodiphénylsulfone et la 4,4'-difluorodiphénylsulfone, par rapport au poids total du composant (A1) dans le mélange réactionnel (R_{G}),
(B1) un composant dihydroxy, qui contient au moins 80 % en poids d'au moins un composé dihydroxy choisi dans le groupe constitué par la 4,4'-dihydroxydiphénylsulfone, le bisphénol A, la 4,4'-dihydroxybenzophénone et l'hydroquinone, par rapport au poids total du composant (B1) dans le mélange réactionnel (R_{G}),
la polydispersité (Q) étant définie comme le quotient de la masse moléculaire moyenne en poids (M_{w}) et de la masse moléculaire moyenne en nombre (Mₙ), mesuré au moyen d'une chromatographie par perméation de gel (CPG) et de diméthylacétamide (DMAc) en tant que solvant contre du polyméthacrylate de méthyle étroitement divisé en tant qu'étalon.

2. Utilisation selon la revendication 1, dans laquelle la polydispersité (Q) est ajustée à ≤ 3,5.

3. Utilisation selon la revendication 1 ou 2, dans laquelle la polydispersité (Q) est ajustée dans une plage allant de 2,0 à ≤ 3,5.

4. Utilisation selon l'une quelconque des revendications 1 à 3, dans laquelle le carbonate de potassium présente une taille de particule moyennée en volume dans la plage allant de 20 nm à 15 µm.

5. Utilisation selon l'une quelconque des revendications 1 à 4, dans laquelle le mélange réactionnel (R_{G}) contient, en tant que composant (D), au moins un solvant polaire aprotique.

6. Utilisation selon l'une quelconque des revendications 1 à 5, dans laquelle le mélange réactionnel (R_{G}) contient, en tant qu'autre composant, au moins un solvant polaire aprotique choisi dans le groupe constitué par l'anisole, le diméthylformamide, le diméthylsulfoxyde, le sulfolane, la N-méthyl-2-pyrrolidone et la N-éthyl-2-pyrrolidone.

7. Utilisation selon l'une quelconque des revendications 1 à 6, dans laquelle le mélange réactionnel (R_{G}) ne contient pas d'autres composés dihalogénés en plus des composés dihalogénés du composant (A1) .

8. Utilisation selon l'une quelconque des revendications 1 à 7, dans laquelle le mélange réactionnel (R_{G}) ne contient pas d'autres composés dihydroxy en plus des composés dihalogénés du composant (B1) .

9. Utilisation selon l'une quelconque des revendications 1 à 8, dans laquelle le mélange réactionnel (R_{G}) contient, en tant que composants (A1) et (B1), de la 4,4'-dichlorodiphénylsulfone et du bisphénol A.
